# EUROPEAN PATENT APPLICATION

(11) **EP 4 083 808 A1**
(43) Date of publication of application: **02.11.2022**
(21) Application number: 21171435.7
(22) Date of filing: 30.04.2021
(51) Int. Cl.: G06F 16/00

(54) **CONTINUOUS FLOW ENGINE DATA STREAM AND BATTERY-BASED POWER STORAGE FACILITY DATA STREAM DATA HANDLING METHOD AND SYS-TEM**

(71) Applicant: Siemens Energy Global GmbH & Co. KG, 81739 München (DE)
(72) Inventor: Gottschalk, Ralph, 07366 Pottiga (DE); Hempl, Martin, 90610 Winkelhaid (DE); Pfeifer, Uwe, 12557 Berlin (DE)

(57) **Abstract**

The present method refers to a method to collect and accessing data streams of continuous flow engines or data streams of battery-based power storage facilities in a very efficient way to improve the insight in such continuous flow engines or battery storages as well as open new possibilities to further improve their operation. Furthermore, the present invention refers to a data management device being able to be introduced into an industrial plant containing such continuous flow engine. Additionally, the present invention refers to system to be utilized to realize the inventive method. Furthermore, the present invention refers to a computer program product causing a computer entity to execute the inventive method.

## Description

The present invention refers to a method of collecting and accessing data streams of at least one continuous flow engine and/or data streams of a battery-based power storage facility. Furthermore, the present invention refers to a data management device containing a processing unit and at least one data storage, wherein the data management device is adapted to be utilized in an inventive method. Additionally, the present invention refers to a system containing an inventive data management device and a data storage. Furthermore, the present invention refers to a computer program product including instructions operable to cause a computing entity to execute an inventive method.

While the generation, storage and distribution of data is a common matter today several fields still suffer from grave drawbacks to make use of all data being generated. Especially, it is often a problem in industrial facilities to tackle the challenge that modern sensors provide a huge amount of data material being unable to be handled by a normal operator, while a highly specialized expert might handle such data yet is located at a different site. Despite fast internet connections it is, for example, in many cases very difficult to provide an efficient flow of the data to enable some expert making use of his expertise and raw data.

Similar problems are observed for battery-based power storage facilities consisting of a plurality of connected batteries utilized to flexibly store electric power. Corresponding facilities suffer from multiple batteries being required to be coupled to provide the demanded voltage and the like. However, minor defect in a single battery results in the whole couple branch of batteries being required to be shut down. Monitoring such battery-based power storage facility, however, is a major challenge to be solved as the flood to data to be monitored requires a highly sophisticated and extensive server system rendering the benefit obtained by such facility quite low. Also, such facility requires an improved possibility to handle the data available and make good use of it to avoid significant losses while keeping the monitoring effort at bay.

Especially, the field of continuous flow engines suffer from the problem of making the data generated by modern continuous flow engines available for further processing. The highly sophisticated monitoring being available already and expected to increase even more produces an amount of data like especially sensor data being almost impossible to be efficiently provided to a remote location. Constantly mirroring the data of all devices easily surpasses any bandwidth available and remotely selecting such data is difficult and inefficient.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of collecting and accessing data streams of at least one continuous flow engine and/or data streams of a battery-based power storage facility, containing the steps of
- processing at least two, more preferred at least four, even more preferred at least seven, data streams utilizing an data management device containing a processing unit and an application programming interface (API), wherein the data streams contain raw data and aggregated data,
- storing the data streams as historical data on a data storage being connected to and/or being part of the data management device, wherein the historical data is stored in a hierarchical data format,
- retrieving historical data utilizing the API. It was noted that the inventive method is especially useful to improve the data handling in the field of continuous flow engine. The effect obtained in this context is remarkable.

The term "hierarchical data format" as used herein refers to the data format as known to the skilled person. Such data format is especially suitable to supports large, complex, heterogeneous data.

The phrase "data stream of at least one continuous flow engine" naturally does not only refer to data streams generated by the continuous flow engine itself. The person skilled in the art understands such phrase to refer to data streams related to such continuous flow engine. Herein, the auxiliaries required to utilize such continuous flow engine are also providing data streams like the temperature of the fuel, the burning and boiling processes in a boiler providing steam for a steam turbine, the temperature of the air in the air inlet of a gas turbine, the oil pressure of hydraulic components controlling various elements required for the utilization of such continuous flow engine, the composition of a fluid to be compressed by a compressor, and the like.

The term "raw data" as used herein refers to unprocessed data acquired from the continuous flow engine or components being related to the function of such continuous flow engine. Like sensor data monitoring the temperature at a specific location, vibration sensor data monitoring the running of the continuous flow engine, a fuel flow measurement device monitoring the fuel consumed, and the like.

The term "aggregated data" as used herein refers to a discontinuous data acquired in the context of the utilization of the continuous flow engine. Typically, it is preferred that this term refers to a summarized data like a mean value over time. For example, it is the mean value of a temperature of the continuous flow engine. Herein, it is not required that only the aggregated data of some continuous data stream is forwarded. It was noted that it is surprisingly beneficial to forward aggregated data and raw data of the same data source simultaneously. Utilizing the inventive method as described herein and especially hereafter it becomes possible to handle this even further increased amount of data and retrieve relevant data with high reliability and speed to ensure some remote unit to provide a very high efficiency.

This method allows to surprisingly easy access such data with a high resolution while securing the data safety and security. Especially, it becomes possible to provide the raw data for continuous flow engines being a special problem based on the size of corresponding data generated and to be retrieved as required. For example, it even becomes possible to utilize raw vibration data by vibration experts located at some remote location being able to retrieve data as required. The data management device can surprisingly easily be provided as unit to be introduced into an existing industrial plant utilizing such continuous flow engine.

According to a further aspect the present invention refers to a data management device containing a processing unit and at least one data storage, wherein the data management device is adapted to be utilized in an inventive method,
wherein the data management device contains an API abstraction layer,
wherein the API abstraction layer is adapted to receive external data requests,
wherein the data management device is adapted to retrieve and forward historical data based on said request.

According to a further aspect the present invention refers to a system containing an inventive data management device and a data storage, wherein the historical data is stored on the data management device and the data storage.

According to a further aspect the present invention refers to a computer program product, tangibly embodied in a machine-readable storage medium, including instructions operable to cause a computing entity to execute an inventive method.

To simplify understanding of the present invention it is referred to the detailed description hereafter and the figures attached as well as their description. Herein, the figures are to be understood being not limiting the scope of the present invention, but disclosing preferred embodiments explaining the invention further.

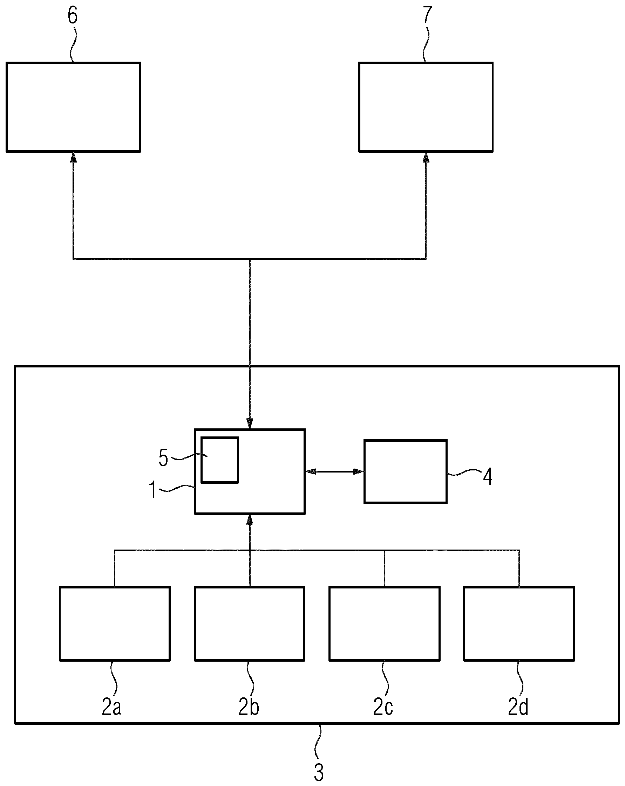

Fig. 1 shows a scheme of an inventive method showing the data exchange inside an industrial power plant and remotely located devices and a remote user interface.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long-term data storage like hard drives or data storage units like CDs, DVDs, USB sticks and the like. Such data storage can additionally include or be connected to a processing unit to allow a processing of the data stored on the data storage.

Continuous flow engines are characterized by a continuous stream flowing through said engine. For example, such continuous flow engine utilizes a stream of fluid flowing through the engine to rotate a rotor that in turn converts the kinetic energy into electricity. Such fluid stream can be generated by means of burning a fuel using burner in a gas turbine or boiling a liquid like water in a steam generator. Examples of corresponding continuous flow engines are gas turbines and steam turbines. Alternatively, such continuous flow engine utilizes energy to move a fluid in said continuous flow engine like in a compressor. Herein, such compressor is often associated to a fridge being an application of the daily life. However, compressors are also utilized in industrial applications like in the chemical industry to continuously compress a fluid like in a cracking process to allow a further processing.

It was noted that such continuous flow engines benefit significantly from the inventive method. It is assumed that the specific data created in such engines is especially suitable to be processed herewith. Supposedly, the amount of data collected for such engines, the data typically collected, the behavior of these engines and correlated created data, as well as many other factors result in the surprisingly high benefit obtained when applying the inventive method in this context.

A battery-based power storage facility contains a plurality of battery arrangement consisting of connected batteries to provide the required output. Such battery-based power storage facilities can be utilized to compensate for a lack of power resulting, for example, from fluctuations during the power generation utilized renewable energy. Herein, a significant number of, for example, lithium batteries needs to be coupled to provide the required output. While such system is flexible and a very good addition to supporting the renewable energies with high-speed adaptable power generation units like gas turbines the battery-based power storage facility suffers from the required processing of data to monitor such facility and its batteries.

According to one aspect the present invention refers to a method as described above.

According to further embodiments it is preferred that it is preferred that the data streams contain high frequency sensor data. Such high frequency sensor data provides values of the corresponding sensor with a frequency being at least 10 values per second, more preferred at least 30 values per second, even more preferred at least 100 values per second. Examples of such high frequency data being typically available for the specified applications are vibration data, combustion data and acoustic data.

According to further embodiments it is preferred that it is preferred that the data streams contain vibration data of the at least one continuous flow engine, preferably raw vibration data. It was noted that processing such data is especially beneficial for gas turbines indicating deviations from the expected state at an early stage utilizing such data.

According to further embodiments it is preferred that it is preferred that the data streams contain acoustic data, preferably raw acoustic data. It was noted that such data can be very beneficially utilized in the context of gas turbines and steam turbines. Corresponding profiles allow to gain significant insight in the wear of components utilizing such means.

According to further embodiments it is preferred that it is preferred that the data streams contain combustion data of the at least one continuous flow engine, preferably raw combustion data. It was noted that such data is very beneficially utilized for gas turbines to optimize the work of the gas turbine. Especially, corresponding data can be utilized to avoid combustion problems during significant workload changes as required to compensate for the fluctuations of renewable energies.

According to further embodiments it is preferred that it is preferred that the data streams contain vibration data and combustion data, preferably raw vibration data and raw combustion data.

According to further embodiments it is preferred that it is preferred that the historical data is midterm historical data. The term "midterm" historical data preferably refers to historical data of at most the past 4 months, more preferred the past 3 months. It was noted that the inventive system is especially suitable to process such data in corresponding applications.

According to further embodiments it is preferred that the communication between a remote unit and the data management device is secured against unallowed access, preferably encrypted. The term "remote data processing unit" as used herein refers to a data processing unit being preferably at least located outside of the industrial facility containing such continuous flow engine providing such data stream being processed. For example, it can be located at a central location retrieving data from a number of locations generating the historical data. However, such facility containing such remote data processing unit might also contain an own data management device. The communication between such data management device and the in this case local data processing unit does not necessarily have to be encrypted.

According to further embodiments it is preferred that it is preferred that the hierarchical data format is HDF5 format. It was noted that storing the data in this format is especially suitable and enables to further improve the data processing and forwarding significantly for historical data of continuous flow engines. It is assumed that the data generated for such devices is typically very suitable for such format and task providing a typically improved benefit compared to different technical devices.

According to further embodiments it is preferred that the historical data is stored on at least two types of data storage,
wherein the at least two data storages contain at least one fast access data storage and at least one slow access data storage,
wherein most recent historical data is stored on the at least one fast access data storage.

For typical applications it is preferred that such fast access data storage is RAM for typical applications. However, it is also possible to utilize different types of storage providing a fast access to data stored thereon. For example, solid state discs (SSD) and the like can be utilized despite the slightly worse reading and writing speed. As slow access data storage, for example, a normal hard drive can be utilized as the inventive method allows to still access and retrieve the data in a sufficient timely manner even from such data storages.

Such most recent data can be limited according to predefined functional characteristics like a process executed or a predefined time interval or a combination thereof. For example, it can be preferred to predefine a combination of a time limit like the last two hours as well as storing whole processes resulting in an extension of the limit to additionally include process steps extending beyond such time limit. For example, such process can be a change between different performances to always include the corresponding behavior as a whole during such change extending beyond the 2 h mentioned before.

The term "most recent historical data" as used herein refers to the historical data of the recent time like the last hour, preferably the last 10 minutes, wherein the data includes the most recent data of the corresponding data sources being available.

According to further embodiments it is preferred that the most recent historic data is simultaneously stored on at least two data storage devices. Storing the data twice allows to further increase the access speed as well as allows to secure a fast access to such data in case of emergency. It was noted that during alarms such data might be requested from multiple remote as well as local processing units essentially simultaneously. In this context, the additional copy allows to secure the retrieval of specific high priority data requests being a surprising problem especially occurring when allowing such remote access and processing as described herein.

According to further embodiments it is preferred that the API is transporting data in a binary format. It was noted that such binary format is not only very suitable for the data provided for such continuous flow engines. It was further noted that the review and analysis actions taking place at the remote locations typically significantly benefit from such data format and further increase the reaction speed, for example, during alarms. An example of a typically beneficially utilized API in this context is gRPC. This API is an example of an especially suitable API to be utilized in the inventive method. Herein, it is not only the open-source character of the API that renders it very beneficial. In fact, it was noted that the binary format is surprisingly beneficial to process not only the requests and interactions between the remote units and the

According to further embodiments it is preferred that the API utilizes http/2 for forwarding the historical data. Surprisingly, this network protocol is very well suited to efficiently transfer such data.

For many applications it is preferred that the API transport data in a binary format and utilizes http/2 for transporting the data. For example, gRPC fulfills this requirement and can be easily utilized to realize the inventive method. It was noted that such API in combination with the specified data sources provides high performance. Furthermore, such API enables to allow an easy access by means of a different computer simply by opening a port as required. Additionally, it was noted that such API is able to run using almost any operating system.

According to further embodiments it is preferred that the collected historical data contains data streams of at least two continuous flow engines, more preferred at least three continuous flow engines, even more preferred at least 5 continuous flow engines.

According to further embodiments it is preferred that the continuous flow engine is a compressor, a gas turbine, a steam turbine, or a combined cycle power device, more preferred a gas turbine, a steam turbine, or a combined cycle power device, even more preferred a gas turbine.

According to further embodiments it is preferred that the at least one continuous flow engine contains at least one gas turbine,
wherein the historical data contains combustion data of the at least one gas turbine. As discussed herein, it was noted that the inventive method is typically especially beneficial when being applied to such gas turbine.

According to further embodiments it is preferred that the historical data is retrieved by a remote user,
wherein a communication of the remote user and API is secured. For example, such security can be achieved by encryption like software or hardware encryption. Based on the significantly improved possibility to access the data externally it is surprisingly beneficial to already include such security based on corresponding threats that according to the evaluation of experts will be expected in such context.

According to a further aspect the present invention refers to a data management device containing a processing unit and at least one data storage, wherein the data management device is adapted to be utilized in an inventive method,
wherein the data management device contains an API,
wherein the API is adapted to receive external data requests,
wherein the data management device is adapted to retrieve and forward historical data based on said request.

According to further embodiments it is preferred that the at least one data storage contains a RAM data storage.

According to further embodiments it is preferred that the data management device contains a hardware security module. Such hardware security module is a physical device containing a processing unit, wherein said hardware security module safeguards and manages digital keys, performs encryption and decryption functions for digital signatures, strong authentication and other cryptographic functions. Implementing such type of security is typically very beneficial especially in case an upgrade is considered, wherein with little effort a significant amount of security should be achieved right from the start. Furthermore, it was noted that the overall security can be further increased this way being of special importance for the invention based on the new opportunities provided by it.

According to a further aspect the present invention System containing an inventive data management device and a data storage, wherein the historical data is stored on the data management device and the data storage.

According to a further aspect the present invention refers to a computer program product, tangibly embodied in a machine-readable storage medium, including instructions operable to cause a computing entity to execute an inventive method.

The term "distributed database" as used herein refers to a decentralized database like a blockchain, a distributed ledger, a distributed data storage system, a distributed ledger technology-based system, a manipulation proof database, a cloud, a cloud service, a blockchain in a cloud or a peer-to-peer database. Herein, such distributed database can be a public database like a public block chain or a nonpublic database like a private block chain. Typically, it is preferred that such block chain is nonpublic and can only be accessed by authorized persons. Herein, such access right might also be granted for external persons to allow a review of for example the production data of specific products.

The following detailed description of the figure uses the figure to discuss illustrative embodiments, which are not to be construed as restrictive, along with the features and further advantages thereof.

Figure 1 shows a scheme of an inventive method showing the data exchange inside an industrial power plant and remotely located devices and a remote user interface. Herein, the gas turbines 2a, 2b, 2c, 2d as examples of the continuous flow engines generate data streams containing vibration data and combustion data. The corresponding data streams containing even smallest vibrations and deviations of the combustion process are forwarded to the data management device 1. The data management device 1 stores the data streams as historical data on a data storage 4. Herein, the historical data is stored in a hierarchical data format. The hierarchical data format used is HF5 that was identified to be very beneficial for a broad range of application cases in the field of continuous flow engines and especially gas turbines in general.

Herein, the most recent historical data is additionally stored on a RAM data storage data 5 being part of the data management device 1. Herein, the historical data is also stored on this data storage on a historical data format. This allows to further increase the access speed for the most recent data stream data to, for example, react to some specific situation like an alarm requiring to quickly review the corresponding data.

The data management device provides connections to remote units being located outside the industrial power plant 3. Herein, the data management unit utilizes an application programming interface (API) to communicate with the remote units. Exemplarily shown are a user interface 6 and a remote monitoring device 7. The communication between the remote units and the data management device 1 is secured in multiple means. The communication is typically at least partially encrypted to secure that at least specific data is secured against third parties being able to gain insight. For example, requests and the like are preferably encrypted with a higher standard. However, the generic data transferred in response to such request is typically, for example, secured using VPN. This allows a higher data throughput and further improves the utilization of the inventive method in typical application cases.

The API utilized in the example as shown in figure 1 is a binary based API, more detailed gRPC is utilized. This API is especially beneficially utilized to realize the inventive method.

It was noted that such system is especial suited to handle big amounts of data and enable such data to be efficiently reviewed even from remote locations taking into account the limitations resulting from limits of the connection and the like. For example, it is very suited to handle and forward raw vibration data and raw combustion data that based on the sheer amount of data pose a significant problem to be handled this way. While it becomes possible to even handle such raw data efficiently it is still also beneficially to include aggregated data. Herein, the data management device 1 further receives the aggregated data of the vibration data and the combustion data and stores it as historical data on the data storage 4 and data storage 5. Short term data is temporarily stored on the RAM data storage 5 providing an especially fast writing and reading speed. Simultaneously, the short-term data is stored along other data like the midterm data on the data storage 4.

Additionally to such vibration data a plurality of further data streams is received and processed. For example, data regarding the temperature at specific locations of the gas turbines 2a, 2b, 2c, 2d, pressure data and air flow data of the air inlet are continuously received and processed by the data management device 1.

The data management device 1 has been introduced into the industrial power plant 3 as upgrade. Herein, the data management device 1 as well as the data storage 4 have been connected during such upgrade to the existing network. Additionally, the data management device 1 was connected to the internet and configured itself based on data retrieved from a distributed database provided by the manufacturer of the data management device 1 and being connected through the internet.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of collecting and accessing data streams of at least one continuous flow engine and/or data streams of a battery-based power storage facility, containing the steps of
- processing at least two, more preferred at least four, even more preferred at least seven, data streams utilizing an data management device (1) containing a processing unit and an application programming interface (API), wherein the data streams contain raw data and aggregated data,
- storing the data streams as historical data on a data storage (4, 5) being connected to and/or being part of the data management device (1), wherein the historical data is stored in a hierarchical data format,
- retrieving historical data utilizing the API.

2. Method according to any of the aforementioned claims, wherein the data streams contain vibration data of the at least one continuous flow engine.

3. Method according to any of the aforementioned claims, wherein the data streams contain combustion data of the at least one continuous flow engine.

4. Method according to any of the aforementioned claims, wherein the historical data is midterm historical data.

5. Method according to any of the aforementioned claims, wherein the communication between a remote unit and the data management device (1) is secured against unallowed access, preferably encrypted.

6. Method according to any of the aforementioned claims, wherein the hierarchical data format is HDF5 format.

7. Method according to any of the aforementioned claims, wherein the historical data is stored on at least two types of data storage,
wherein the at least two data storages (4, 5) contain at least one fast access data storage (5) and at least one slow access data storage (4),
wherein most recent historical data is stored on the at least one fast access data storage.

8. Method according to any of the aforementioned claims,
wherein the API is transporting data in a binary format, preferably the API is gRPC.

9. Method according to any of the aforementioned claims,
wherein the collected historical data contains data streams of at least two continuous flow engines.

10. Method according to any of the aforementioned claims,
wherein the at least one continuous flow engine contains at least one gas turbine,
wherein the historical data contains combustion data of the at least one gas turbine.

11. Method according to any of the aforementioned claims,
wherein the historical data is retrieved by a remote user,
wherein a communication of the remote user and API is secured.

12. Data management device (1) containing a processing unit and at least one data storage, wherein the data management device (1) is adapted to be utilized in a method according to any of claims 1 to 11,
wherein the data management device (1) contains an API,
wherein the API is adapted to receive external data requests,
wherein the data management device (1) is adapted to retrieve and forward historical data based on said request.

13. Data management device (1) according to claim 12, wherein the at least one data storage contains a RAM data storage.

14. System containing a data management device (1) according to any of claims 12 to 13 and a data storage, wherein the historical data is stored on the data management device (1) and the data storage.

15. Computer program product, tangibly embodied in a machine-readable storage medium, including instructions operable to cause a computing entity to execute a method according to any of claims 1 to 11.
